# EUROPEAN PATENT APPLICATION

(11) **EP 2 463 391 A1**
(43) Date of publication of application: **13.06.2012**
(21) Application number: 10194360.3
(22) Date of filing: 09.12.2010
(51) Int. Cl.: C21D 1/10, C21D 1/42, C21D 9/30, F16C 3/08, F16C 3/06

(54) **Induction hardened component containing a hole which is unhardened.**

(71) Applicant: Perkins Engines Company Limited, Eastfield Peterborough PE1 5NA (GB)
(72) Inventor: Holt, Christopher, Stamford, Lincolnshire PE9 2SU (GB)
(74) Representative: Bucks, Teresa Anne

(57) **Abstract**

The invention relates to improvements in the selective hardening of components containing orifices and, in particular, to components such as crankshafts for internal combustion engines. An induction hardened component comprises a surface and an orifice in the surface and extending away from the surface. An area of the surface is induction hardened, which induction hardened area excludes a zone around the orifice.

## Description

### TECHNICAL FIELD

The invention relates to improvements in the selective hardening of components containing an orifice.

### BACKGROUND

It is a known practice to improve the wear and fatigue characteristics of components, such as crankshafts, by induction hardening. Induction hardening is a form of heat treatment which uses an induction coil to produce localised heating. The heated component is quenched to induce a martensitic transformation to produce a hardened surface. Induction heating is a particularly convenient process to achieve this as it is a non-contact heating process which can target a specific area, or areas, of the component.

US-A-2002/0040619 describes some of the disadvantages of conventional induction hardening, such as component distortion and energy consumption. To overcome the disadvantages described this prior art document proposes the selective hardening of a crankshaft in just the oil hole breakout zones and the thrust face fillets.

When induction hardening crankshafts and the like which include oil ducts or other orifices, cracking is a major risk in particular where the oil hole drilling is not at a right angle to the shaft surface. This is because the masses of metal between the drilling and the shaft surface are largely unequal, leading to complex thermal expansion/contraction cycles.

### SUMMARY

According to the present disclosure there is provided an induction hardened component comprising a surface and an orifice in the surface, wherein an area of the surface is induction hardened, which induction hardened area excludes a zone around the orifice which is substantially unhardened.

The present disclosure also provides a method of induction hardening a component comprising a surface and an orifice in the surface, wherein an area of the surface is induction hardened, which induction hardened area is produced such that it excludes a zone around the orifice which is substantially unhardened.

### BRIEF DESCRIPTION OF THE DRAWINGS

An embodiment of an induction hardened component according to the present disclosure is now described, by way of example, with reference to the accompanying drawings in which:-
Figure 1 is a side elevation of a part of a crankshaft for an internal combustion engine; and
Figure 2 is a schematic diagram showing localised sites of induction hardening.

### DETAILED DESCRIPTION

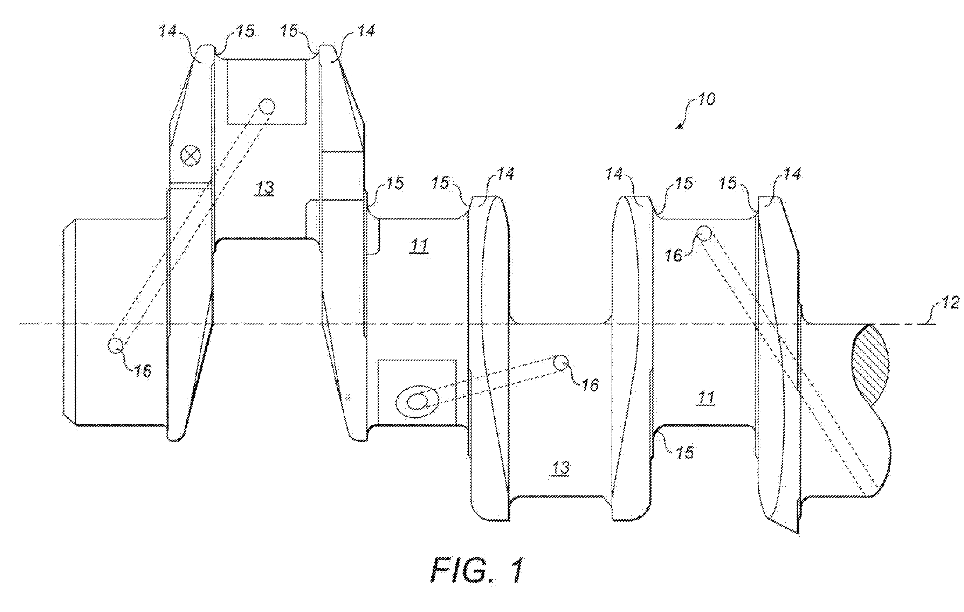

Figure 1 illustrates one example of a component 10 having an orifice 16. The component 10 comprises a crankshaft for an internal combustion engine and includes oil ducts. Crankshafts are typically made from cast iron or steel and may generally comprise main journals 11 aligned on the crankshaft axis 12 which provide highly polished radially facing circumferential bearing surfaces on which the main bearings may be mounted. Located between the main journals 11, and offset from the crankshaft axis 12, are rod journals 13, which may be highly polished surfaces to which the connecting rods can attach.

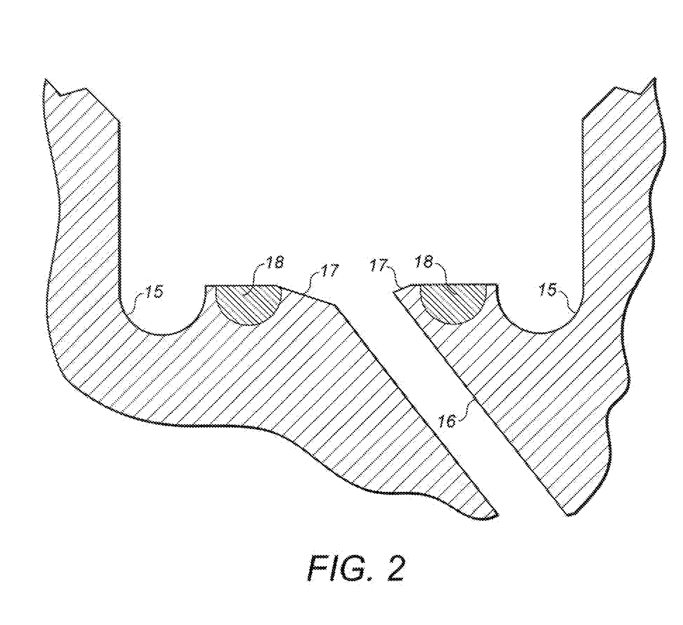

The main and rod journals 11,13 may be connected by webs 14. Where the main and rod journals 11,13 attach to the webs 14 there is typically a radiussed fillet 15. Each adjacent pair of main journals and rod journals 11,13 may be interconnected by oil ducts which may extend away from an orifice 16 in the surface of each journal 11,13 to distribute lubricant to the journals 11,13. The fillets 15 may be undercut, as shown in Figure 2, and the orifices 16 may have a chamfer 17 at their mouths in the journal surfaces.

Induction hardening is applied to a selected hardened area 18 of the surface of the component 10 with a zone around the orifice 16 which is left substantially unhardened, i.e. an "exclusion zone". In the example shown in Figure 2 the selected hardened area 18 is applied to the surface of the journal 11,13 in two or more bands, which avoid the orifice 16 and chamfer 17. This leaves the exclusion zone around the orifice 16, which is the mouth of the oil duct on the journal 11,13, which is substantially free from induction hardening. In this embodiment the exclusion zone also encompasses the radiussed fillets 15, although a component 10 may only have an exclusion zone around the orifice 16. This means that the geometry of the orifice 16 and oil duct, and radiussed fillets 15 if included, may not go through the heating and rapid cooling cycle that contributes to crack generation around the orifice 16 or at the radiussed fillets 15. Ideally the total induction hardened area 18 should be as wide as possible, with the exclusion zone beginning just shy of the orifice 16, or chamfer 17 if present.

In another embodiment the exclusion zone comprises an annular band around the orifice 16.

In one example of a crankshaft made from SGI cast iron the width of the surface of the journals 11,13 is 43.585 ± 0.115mm. The depth and width of the hardened bands 18 applied on either side of the oil duct orifice 16 are 2mm and 8.3mm respectively and the bands 18 are applied 8.4 ± 0.75mm from the webs 14. The exclusion zone is 0.5 ± 0.25mm. These parameters may vary according to the nature, intended use and configuration of the component.

All other details of the induction hardening pattern may be as traditionally carried out. The depth of the hardened area 18 may be similar to that produced in a traditional induction hardened component, for example to allow for surface regrinding of the journals 11,13.

The band induction hardening pattern illustrated in Figure 2 is primarily designed for wear resistance. However it is known in the production of crankshafts to use fillet induction hardening for fatigue strength enhancement. This requires extending the induction hardened zone around each fillet 15. If this is desirable in the component 10, then the sole exclusion zone may be the area around the orifice 16.

The induction hardening process required to produce the hardening patterns of the present disclosure may be carried out using known equipment currently in use. However it may be necessary to design the inductors, which include the induction coils, to create the required pattern according to the nature and design of the component.

The induction hardening process generally comprises the steps of positioning the inductors close to the selected portions of the component, applying power to the coils to produce the localised heating by induction, followed by quenching. The power, times and temperatures to be used will be apparent to a person skilled in the art of conventional induction hardening.

### INDUSTRIAL APPLICATION

The invention has industrial applicability in the production of crankshafts and many other components which include orifices and ducts and are made of materials such as steel, ductile iron and other ferrous metals, which require hardening over a portion of a surface thereof to prevent distortion, in particular bend, twist and axial growth.

## Claims

1. An induction hardened component (10) comprising a surface and an orifice (16) in the surface, wherein an area (18) of the surface is induction hardened, which induction hardened area (18) excludes a zone around the orifice (16) which is substantially unhardened.

2. An induction hardened component (10) as claimed in claim 1 in which the induction hardened area (18) comprises induction hardened bands on either side of the orifice (16).

3. An induction hardened component (10) as claimed in claim 1 in which the unhardened zone comprises an annular band around the orifice (16).

4. An induction hardened component (10) as claimed in any one of the preceding claims further comprising at least one radiussed portion connecting said surface to another portion of the component, wherein the hardened area (18) excludes the radiussed portion.

5. An induction hardened component (10) as claimed in any one of claims 1 t0 3 further comprising at least one radiussed portion connecting said surface to another portion of the component (10), wherein the hardened area (18) includes the radiussed portion.

6. An induction hardened component (10) as claimed in any one of the preceding claims comprising a crankshaft, said crankshaft comprising:
at least one main journal (11) having a radially facing circumferential surface;
at least one rod journal (13) having a radially facing circumferential surface;
a web portion (14) extending between adjacent main and rod journals (11,13);
a circumferential fillet (15) joining the journals (11,13) to the web portion (14);
at least one oil duct extending through the main and rod journals (11,13) and terminating at an orifice (16) in the surface of each journal (11,13);
wherein the hardened area (18) comprises an area of the surface of each journal (11,13), which hardened area (18) excludes a zone around the orifice (16) in each surface which is substantially unhardened.

7. An induction hardened component (10) as claimed in claim 6 when dependant on any one of claims 1 to 4 in which the hardened area (18) excludes the circumferential fillet.

8. An induction hardened component (10) as claimed in claim 6 when dependant on any one of claims 1, 2, 3 and 5 in which the hardened area (18) includes at least a part of the circumferential fillet.

9. A method of induction hardening a component (10) comprising a surface and an orifice (16) in the surface, wherein an area (18) of the surface is induction hardened, which induction hardened area (18) is formed such that it excludes a zone around the orifice (16) which is substantially unhardened.

10. A method as claimed in claim 9 in which the induction hardened area (18) is formed as induction hardened bands on opposing sides of the orifice (16).

11. A method as claimed in claim 9 in which the induction hardened area (18) is formed as an annular band around the orifice (16).

12. A method as claimed in any one of claims 9 to 11 in which the component (10) further comprises at least one radiussed portion connecting one or both sides of said surface to another portion of the component (10), wherein the hardened area (18) is formed such that it excludes the radiussed portion.

13. A method as claimed in any one of claims 9 to 11 in which the component (10) further comprises at least one radiussed portion connecting one or both sides of said surface to another portion of the component (10), wherein the hardened area (18) is formed in the radiussed portion.
